(19) Europäisches Patentamt
European Patent Office
Office européen des brevets

(11) EP 4 177 988 A1

(12) EUROPEAN PATENT APPLICATION

(43) Date of publication:
10.05.2023 Bulletin 2023/19

(21) Application number: 22205310.0

(22) Date of filing: 03.11.2022

(51) International Patent Classification (IPC):
H01M 4/525 (2010.01)    H01M 10/54 (2006.01)
C01G 53/00 (2006.01)    C01G 53/04 (2006.01)

(52) Cooperative Patent Classification (CPC):
C01G 53/006; C01G 53/04; C01G 53/50;
H01M 4/525; H01M 10/54

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 05.11.2021 US 202117519914

(71) Applicant: Battery Resources LLC
Worcester, Massachusettes 01609 (US)

(72) Inventors:
• Wang, Yan
Acton, 01720 (US)
• Gratz, Eric
Worcester, 01606 (US)
• Yadong, Zheng
Worcester, 01609 (US)

(74) Representative: Greaves Brewster LLP
Copa House
Station Road
Cheddar, Somerset BS27 3AH (GB)

(54) **CHARGE MATERIAL SYNTHESIZED FROM RECYCLED LITHIUM-ION BATTERIES**

(57) Lithium-ion battery (LIB) recycling is considered as an important component to industry sustainability. A massive number of LIBs in portable electronics, electric vehicles and grid storage will eventually end up in wastes, leading to serious economic and environmental problems. Hence, tremendous effort has been made to improve hydrometallurgical recycling process since it is the most promising option for handling end-of-life LIBs owing to its wide applicability, low cost and high productivity. Despite these advantages, some extra elements (Al, Fe, C, F, etc.) remain as impurities in the removal process and remain in the solution, presenting a challenge to obtaining highquality cathode material. This approach demonstrates the improved electrochemical performance by adding potential impurities in the leaching solution.

Fig. 1

EP 4 177 988 A1

**Description**

RELATED APPLICATIONS

This Patent Application is related to U.S. Patent App. No. 15/358,862, filed November 22, 2016, now U.S. Patent No. 10,522,884, entitled "METHOD AND APPARATUS FOR RECYCLING LITHIUM-ION BATTERIES," incorporated herein by reference in entirety.

BACKGROUND

lithium-ion batteries (LIBs) enjoy widespread usage for automotive, personal electronics and industrial applications. A waste stream for recycled batteries generally involves indiscriminate agitation (crushing and shredding) of full battery assemblies, resulting in comingled mixtures of cathode, anode, separator and casing materials. Mainstream cathode materials used in LIBs (NCM for example) consist of heavy metals such as nickel and cobalt which are not only toxic but also expensive and limited. Undoubtably, the cumulative burden of battery waste may present environmental and economic challenges unless there is a practical solution to manage end-of-life LIBs. Recycling technologies mainly include three categories, including pyrometallurgical recycling, hydrometallurgical recycling, and direct physical recycling. Hydrometallurgical process, due to its high recovery efficiency, large-scale production capability as well as low energy cost, has been widely adopted both in research and industry as a promising approach for battery recycling

Lithium-ion battery (LIB) recycling is considered as an important component to industry sustainability. A massive number of LIBs in portable electronics, electric vehicles and grid storage will eventually end up in wastes, leading to serious economic and environmental problems. Hence, tremendous effort has been made to improve hydrometallurgical recycling process since it is the most promising option for handling end-of-life LIBs owing to its wide applicability, low cost and high productivity. Despite these advantages, extraneous elements (Al, Fe, C, F, etc.) often remain as impurities in the removal process and remain in the solution, presenting a challenge to obtaining highquality cathode material.

SUMMARY

Configurations herein demonstrate beneficial enhancements resulting from fluorine impurities or doping in NCM cathode material obtained via hydrometallurgical co-precipitation. Up to 5 at% fluorine impurity can have a positive influence on the recovered material due to a higher $Ni^{2+}$ ratio on the surface of the cathode particles. In addition, the presence of fluoride ions during co-precipitation leads to the formation of holes in cathode particles which improves rate capability and cyclability dramatically. Compared to virgin charge materials, the capacity of NCM622 ( $LiNi_{0.6}Co_{0.2}Mn_{0.2}O_2$ ) material with 0.2 at% fluorine impurity is boosted by ~8% (167.7 mAh/g) with a remarkable capacity retention of 98.0% after 100 cycles at 0.33C. Additionally, cathode material with 0.2 at% fluorine impurity shows a far better rate performance, especially at high rates (~7% increased at 5C), over that of virgin. These results demonstrate improved electrochemical performance by adding potential impurities in the leaching solution, and more specifically that a low concentration of fluorine impurity is desirable in a hydrometallurgical recycling process, particularly for NCM formulation. The disclosed approach demonstrates beneficial implications in the design of high performance NCM622 cathode materials via co-precipitation production with ion doping.

Configurations herein are based, in part, on the observation that the recycling stream for Li-Ion batteries has a tendency to introduce additional materials, often deemed "impurities." The physical dismantling of previously deployed batteries introduces structural and circuit aspects into the recycling stream, such as physical casing, current collectors, and internal circuitry. There may also be preexisting impurities in the exhausted/spent charge material. Unfortunately, conventional approaches suffer from the shortcoming that it can be difficult to completely remove impurities, and often result in a balancing to remove enough of the impurities without removing valuable charge material compounds. Configurations herein substantially overcome the shortcomings of conventional approaches by identifying impurities that actually have a beneficial effect on the performance of the resulting charge material.

A battery recycling method identifies small or trace compounds in a leach solution resulting from a recycling stream of dismantled batteries. Battery performance is based on an ability for the charge material to generate an electron flow by transporting electrons between the ions in the charge material. The active charge material includes particles clustered or aggregated together to form a crystalline or network of molecules. Oxidation states of each of the molecules, particularly on the particle surface, affects the performance of the battery for aspects such as charge capacity, discharge rate, and longevity of charge cycles. Inclusion of certain additional trace elements, whether through incidental inclusion from the recycling stream or from additions to the leach solution, or "doping," can have a beneficial effect on performance of the resulting recycled battery. In particular, a small amount of a halide such as fluorine has the capability to favor an oxidation state of +2 on nickel and cobalt. An increase in the +2 atoms relative to atoms with a +3 oxidation state on a particle surface has a beneficial effect on performance.

A high-efficiency closed-loop hydrometallurgical recycling method for recycling end-of-life LIBs has been developed in the cited application above. In this process, spent LIBs are dismantled, crushed, and sieved. The resulting mixed powder passes through a leaching and subsequent purification process. Afterward, the purified solution was adjusted to a desired concentration ratio of target charge materials for subsequent co-precipitation to produce precursors. Final recovered cathode material was obtained by high-temperature sintering of the precursors. This novel recycling method has a high recovery efficiency (-90%) and it is applicable to a wide range of cathode materials ($LiNi_xCo_yMn_zO_2$, x+y+z = 1). Above all, the recovered cathode products possess a similar or even better electrochemical properties compared to the commercial counterparts. However, impurities caused by incomplete purification remains a potential issue for the hydrometallurgical technique. In fact, it is difficult to separate all impurity elements such as Al, Fe and Cu from useful transition metals in the solution due to their similar properties. Beneficial impacts on the recovered cathodes as a result of impurities has drawn greater attention among researchers. For example, metal ions such as $Al^{3+}$, $Fe^{3+}$, and $Cu^{2+}$, are demonstrated to have positive influences on the final recovered cathodes only if the impurity level is very low. In particular, these cations may replace transition metal ions within cathode crystals by forming precipitates during synthesis.

The disclosed approach depicts improved performance of recovered NCM, and in particular NCM622 materials under the influence of fluorine impurity via hydrometallurgical synthesis. The disclosed approach is also applicable to other NCM chemistries. An additional fluorine source NaF with the content of 0.2 at%, 1 at% to 5 at% (relative atomic percent of the total transition metals, Ni+Co+Mn = 1) is added in the metal sulfate leach solution prior to co-precipitation reaction as an impurity involved in recycling process. The NCM622 virgin material (denoted as VNCM) and fluorine impurity affected materials (denoted as 0.2FNCM, 1FNCM and 5FNCM) are presented. It is revealed that fluoride ions during co-precipitation lead to the creation of holes inside precursor particles. After sintering, fluoride ions are found to occupy oxygen sites in cathode crystal and mainly form bonds with Ni ions ($NiF_2$) which notably increases the ratio of $Ni^{2+}/Ni^{3+}$ on the particle surface. Also, bulk diffusivity improves owing to a minor lattice expansion and a well-ordered structure when fluorine impurity level is not excessive. Both 0.2FNCM and 1FNCM samples display an excellent discharge capacity of ~167 mAh/g (~8% better than VNCM) with a superb capacity retention of ~98% (VNCM 94.8%) after 100 cycles at 0.33C. Moreover, compared to virgin based materials, all FNCM cathodes possess a superior rate capability, especially at high rates. Indeed, holes in cathode particles, high surface $Ni^{2+}$ content and improved bulk lithium diffusivity demonstrate the positive aspects of fluorine impurity in hydrometallurgical recycling. Further, the cobalt oxidation state on the cathode surface would be affected if excessive fluoride quantities are introduced in the NCM622 crystal lattice. A high $Co^{2+}$ concentration has been detected on the 5FNCM cathode surface, resulting in a poor cation ordering and structure stability which falls short of other F-doped NCM622 in terms of electrochemical properties. The results indicate that a balance of fluorine impurity has a beneficial effect in battery hydrometallurgical recycling, however subsides at a high level of fluoride ion content (> 1 at%) and should be prevented during the process. Furthermore, the disclosed approach demonstrates the feasibility of mass production of "boosted" NCM622 cathodes using the hydrometallurgical approach with the help of fluoride additives.

In a particular configuration, the disclosed method of generating a charge material precursor having a preferred oxidation state for secondary battery charge materials includes forming a leach solution including target charge materials by leaching the target charge materials, obtained from a recycling stream, in a leach solution, and controlling the pH of the leach solution for dissolving the target charge materials in the leach solution. A particularly appealing battery chemistry includes charge materials of nickel, manganese and cobalt, (NMC or NCM). The method establishes a predetermined percentage of halides, such as from fluorine, in the leach solution based on an oxidation state of one or more of the target charge materials, such as a ratio of +2 and +3 oxidation states resulting from a doped substance. The recycled material is obtained by adding a strong base to the leach solution for precipitating charge material particles. The charge material particles include the target charge materials in a charge material precursor form for subsequent sintering with a Li compound.

BRIEF DESCRIPTION OF THE DRAWINGS

The foregoing and other features will be apparent from the following description of particular embodiments disclosed herein, as illustrated in the accompanying drawings in which like reference characters refer to the same parts throughout the different views. The drawings are not necessarily to scale, emphasis instead being placed upon illustrating the principles of the invention.

Fig. 1 is a context diagram of a hydrometallurgical recycling approach suitable for use with configurations herein;
Fig. 2 shows the precursor morphology at different times in which the average particle diameter and sphericity increases;
Fig. 3 shows the SEM images of synthesized NCM622 samples from precursor;
Figs. 4A-4D show phase and structure of prepared materials are analyzed by powder X-ray diffraction with patterns;

Figs. 5A-5D show refinement profiles of VNCM, 0.2FNCM, 1FNCM and 5FNCM cathodes of the materials of Figs. 4A-4D;
Fig. 6A-6C show spectra of surface scans of the cathode materials;
Figs. 7A-7D show deconvolution scans and percentages of Ni and Co surface ions on the cathode material particles;
Figs. 8A-8C show a plot of fitting lines between peak current (Ip2) vs. scan rate (v);
Fig. 9 shows li-ion diffusion within different cathode crystal structures; and
Figs. 10A-10C are schematic diagrams showing formed holes based on the doping/impurities.

DETAILED DESCRIPTION

Depicted below is an example method and apparatus for recycling batteries such as lithium ion batteries. The proposed approach is an example and is applicable to other lithium and non-lithium batteries for recycling spent batteries and recovering active cathode material suitable for use in new batteries.

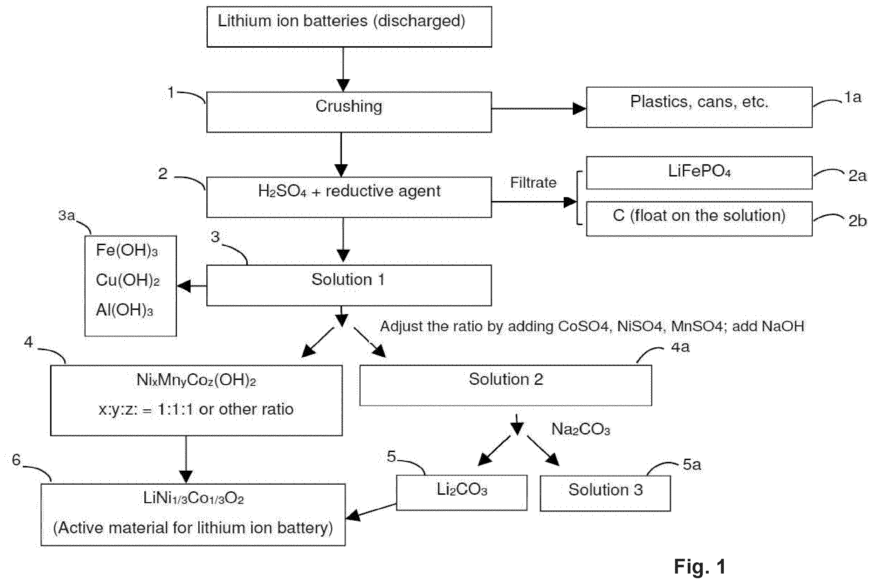

Fig. 1 is a context diagram of a hydrometallurgical recycling approach suitable for use with configurations herein. The cathode materials widely used in commercial lithium ion batteries include $LiCoO_2$, $LiMn_2O_4$, $LiNiO_2$, $LiNi_xCo_yAl_zO_2$, $LiNi_xMn_yCo_zO_2$ and $LiFePO_4$. In order to recycle lithium ion batteries effectively, it is beneficial to consider all the various battery chemistries. Thus, it is beneficial to develop a simpler and environmentally acceptable recycling process generally applicable to various widely used LIBs. Configurations disclosed herein present an example to extract compounds including the desirable elements of Co, Ni, Mn, and Li from mixed cathode materials and utilize the recycled materials to produce active materials for batteries. Alternate chemistries may be recycled using the methods disclosed.

Referring to Fig. 1, at step 1, discharged Li ion batteries are crushed/shredded. Mechanical separation processes are applied as a pretreatment to separate the outer cases and shells and the plastic fraction, as shown at step 1a. The recycling stream is a comingled mass including at least some of the charge materials, e.g. Ni, Mn, Co of the target charge materials, meaning the battery chemistry and ratio of the intended recycled battery, such as NMC 622, NMC 532, NMC 111 or NMC 811, for example.

The sieved cathode powder will be leached by 4-5M sulfuric acid ($H_2SO_4$) and a reducing agent such as 29-32% hydrogen peroxide for about 2-3 hours at 70-80°C, as depicted at step 2. Other concentrations of the leach acid may also be employed, as well as alternate reducing agents. In alternate arrangements, the leach solution may be formed from a leach acid including one or more of sulfuric acid, hydrochloric acid, nitric acid, phosphoric acid, boric acid, hydrofluoric acid, hydrobromic acid, hydroiodic acid and perchloric acid. Addition of hydrogen peroxide $H_2O_2$ changes not only $Fe^{2+}$ to $Fe^{3+}$, but also other metal ions Mn, Ni, Co to 2+, thus leading to separate iron by controlling pH of the solution in step 3. After filtration, residual $LiFeO4$ and carbon can be separated by centrifugation, as shown at step 2a. Other impurities are also removed from the surface of the solution, as shown at step 2b.

The metallic elements of interest are transferred to the aqueous solution as the crushed raw cathode materials form a granular mass used to generate the solution of aggregate battery materials from the spent cells, as depicted at step 3. This includes the target charge materials of Co (cobalt), Ni (nickel), Mn (manganese); other target charge materials may be employed using the present approach with alternate battery chemistries. The pH is adjusted to extract iron, copper and aluminum as $Fe(OH)_3$, $Cu(OH)_2$ and $Al(OH)_3$. This involves adjusting the pH to a range between 3.0-7.0. Accordingly, an NaOH solution is added to adjust pH number to deposit $Fe(OH)_3$, $Cu(OH)2$ and $Al(OH)_3$ which have a lower solubility constant, and maintain $Mn^{2+}$, $Co^{2+}$, $Ni^{2+}$ in the solution, then $Fe(OH)_3$, $Cu(OH)2$ and $Al(OH)3$ are separated by filtration. It should be noted that the above processes include maintaining the solution at a temperature between 40 deg. C. and 80 deg. C, thus avoiding high heat required in conventional approaches.

The pH adjustment for impurity removal generally adjusts the pH based on particular impurities sought for removal. A pH range of around 3 -5, for example, causes iron to precipitate out of solution. Copper tends to precipitate at a pH around 5 -7. Depending on the quantity and type of impurities in the recycling stream, the impurity removal phase may target different pH ranges. Once the charge material metals (Ni, Mn, Co) have been dissolved, the pH will have been reduced to around 1-3 depending on the quantity and concentration of the acid leach. Before the pH is raised to precipitate the NCM in a pure form, impurities can be precipitated, optionally through addition of a reductant, discussed further below. In other words, while adding sodium hydroxide or other strong base for raising the pH, the impurities precipitate out at a lower pH, followed by precipitation of NCM hydroxides at a higher pH. The strong base may also include precipitation agents selected from the group consisting of sodium hydroxide or potassium hydroxide such as mixtures of sodium hydroxide or potassium hydroxide.

The target charge materials are now dissolved in the solution. Based on the predetermined target ratio of the target charge materials, the solution is adjusted to achieve the predetermined ratio of target charge materials. In the example approach, this is a 6:2:2 combination of nickel, cobalt and manganese, although any suitable ratio could be employed. Therefore, adjusting the solution includes identifying a desired ratio of the charge materials for use in recycled cathode material resulting from the generated solution, and adding virgin materials to achieve the desired ratio. Adding the raw materials includes adding additional quantities of the target charge materials for achieving the desired ratio without separating the individual target charge materials already in solution form, therefore the mixed target charge materials (Co, Mn, Ni) do not need to be separately drawn or extracted as in conventional approaches, which usually involve high heat to break the molecular bonds of the compounds.

In other words, the pH is raised first to extract elements considered "impurities," meaning those other than the charge materials. In an NCM chemistry, this would include Fe, Cu, Al and other trace materials. Al may in fact be part of the battery chemistry in other battery formulations. Once impurities are extracted, the pH is further increased to precipitate the target charge materials. In configurations herein, halides such as fluorine are formed from either a residual quantity from the recycling stream, and/or addition of additional materials as a doping agent.

To achieve the intended chemistry, or ratio of the target charge materials, the concentration of $Mn^{2+}$, $Co^{2+}$, $Ni^{2+}$ in the solution is tested, and adjusted the ratio of them to 6:2:2 or other suitable ratio with additional $CoSO_4$, $NiSO_4$, $MnSO_4$. A NaOH solution is added to increase the pH to around 11, usually within a range of 10.0-13, thus adjusting a pH of the solution such that the target charge materials for the new (recycled) charge materials precipitate. $Ni_{1/3}Mn_{1/3}Co_{1/3}(OH)_2$ or $Ni_{1/3}Mn_{1/3}Co_{1/3}O(OH)$ or a mixture thereof can be coprecipitated such that the respective mole ratio is 1:1:1, as depicted at step 4. $Ni_xMn_yCo_z(OH)_2$ or $Ni_xMn_yCo_zO(OH)$ or a mixture with different ratios of x, y, and z can also be precipitated. $Na_2CO_3$ is added in the solution to deposit $Li_2CO_3$, as depicted at step 5. Finally, the recovered $Ni_{1/3}Mn_{1/3}Co_{1/3}(OH)_2$ and $Li_2CO_3$ are sintered to produce the cathode material.

In the example arrangement, the target charge materials include manganese (Mn), cobalt (Co), and nickel (Ni) extracted from charge material of the spent battery cells, in which the target charge materials remain commingled in the solution during precipitation. Adjusting the pH includes adding a substance, such as NaOH (sodium hydroxide, also referred to as lye or caustic soda) for raising the pH such that the target charge materials precipitate, however any suitable substance for raising the pH may be employed. The end result is that adjusting the pH includes adding sodium hydroxide for raising the pH to permit precipitation of the target charge materials for use as a cathode precursor material without separately precipitating the individual compounds defining the target charge materials. The intermediate, or precursor form will result in a lithium oxide form following sintering with lithium carbonate $Li_2CO_3$.

$Na_2CO_3$ is added in the solution to deposit $Li_2CO_3$ at about 40°C. After filtrating, $Li_2CO_3$ can be recycled as the starting material to synthesize the active cathode material $LiNi_{1/3}Mn_{1/3}Co_{1/3}O_2$, as shown at steps 5 and 5a. Therefore, the method adds back the lithium to the precipitated target charge materials to form active cathode material suitable for the new battery, and precipitates the target charge material in the predetermined ratio to form charge material for a new battery.

The coprecipitated materials $Ni_{1/3}Mn_{1/3}Co_{1/3}(OH)_2$ or $Ni_{1/3}Mn_{1/3}Co_{1/3}O(OH)$ or their mixture and recovered $Li_2CO_3$, with additional $Li_2CO_3$ in molar ratio 1.1 of Li versus M (M=$Ni_{1/3}Mn_{1/3}Co_{1/3}$), are mixed and grinded in mortar, as depicted at step 6. The mixture may be reformulated by any suitable processing to form the active cathode material 134 for new batteries 140. In the example approach, the mixture was sintered at 900 for 15 hours. The reaction product may be ground into powder for subsequent distribution and reformation into new cells 140. The $LiNi_{1/3}Mn_{1/3}Co_{1/3}O_2$ is sintered by a high temperature solid-state method at 900°C for 15 hours.

Extending the approach of Fig. 1, cathode materials were synthesized by co-precipitation reaction and post-sintering process, in which transition metal ions $M^{2+}$ (M = Ni, Co, Mn) coprecipitate to form $Ni_{0.6}Co_{0.2}Mn_{0.2}(OH)_2$ precursor in an alkaline solution, then a mixture of dried precursors and lithium salt was sintered to obtain $LiNi_{0.6}Co_{0.2}Mn_{0.2}O_2$ (NCM622) as the final cathode samples. Examples below illustrate a leach solution to include the target charge materials to result in a 622 NMC charge material precursor and the halides consist of fluoride at a predetermined percentage of substantially around 1.0 at%. Additional configurations may establish a predetermined percentage of halides in the leach solution based on an oxidation state of one or more of the target charge materials, as intended to be formed on the resulting charge material particles. The halides are based on halogens and an electronegativity of another atom. Other suitable halides may be employed, including some of the more common ions: chloride (Cl-), bromide (Br-), iodide (I-) and astatide (At-).

Metal sulfate hydrates $NiSO_4·6H_2O$, $CoSO_4·7H_2O$ and $MnSO_4·H_2O$ were added into deionized (DI) water at a stoichiometric ratio of 6:2:2 to obtain 2 M metal sulfate solution. For impurity-involved sample preparation, NaF salt was mixed into the metal sulfate solution with different concentrations of 0.2 at%, 1 at% and 5 at%, and designated as 0.2FNCM, 1FNCM and 5FNCM respectively, hereinafter. Prior to commencement, 0.5 M$NH_3·H_2O$ was filled into a 5 L continuous stirred-tank reactor (CSTR) as a complexing agent. Then, the metal sulfate solution and ammonia solution were pumped into the reactor with a controlled flow rate. Meanwhile, 7.5 M NaOH solution was added into the reactor by a peristaltic pump to keep the reaction at a desired pH condition. The co-precipitation reaction was operated continuously for 12 hours at a steady condition of pH = 11 and T = 55°C under nitrogen protection. After reaction, synthesized precursors were filtered and washed with DI water to remove residuals until pH reduced to 7, then precursor powders were dried in oven at 130 °C overnight. To obtain cathode materials, precursors were mixed with $Li_2CO_3$ in a mortar at a stoichiometric ratio of 1:1.05 (5% excess of lithium salt was used in order to compensate for the loss of lithium ions during sintering). Next, the mixture underwent a two-step sintering process: (I) heated up to 450 °C for 5 h then cooled down to room temperature, (II) heated up to 850 °C for 18 h then followed by a same cooling method (ramp rate was fixed to 2 °C per minute). In the end, a total number of four cathode materials were obtained: $LiNi_{0.6}Co_{0.2}Mn_{0.2}O_2$ (VNCM), and $LiNi_{0.6}Co_{0.2}Mn_{0.2}F_xO_{2-x}$ (x = 0.002, 0.01 and 0.05, named as 0.2FNCM, 1FNCM and 5FNCM, respectively).

The particle morphologies and microstructures were observed by scanning electron microscopy (SEM, JEOL JSM-7000F) coupled with energy-dispersive spectroscopy (EDS) to analyze element composition. Inductive coupled plasma mass spectroscopy (ICP-MS) was utilized to measure the precise concentrations of all metallic elements in the cathodes. The phases of each sample were identified by powder X-ray diffraction (XRD, PANalytical Empyrean) with Cu K$\alpha$ ($\lambda$ = 1.54 Å) and a step size of 0.02° per scan. To acquire lattice parameters, the following Rietveld refinement was conducted via FullProf software and the powder structure of $LiNi_{0.6}Co_{0.2}Mn_{0.2}O_2$ (PDF# 00-066-0854) was chosen as the reference model. X-ray photoelectron spectroscopy (XPS) data for all cathodes was acquired using PHI 5000 VersaProbe II system (Physical Electronics) to investigate element composition and the oxidation state of transition metals. The X-ray source was operating at 25 W equipped with monochromatic Al Ka (h$\upsilon$ = 1486.6 eV) which was set at $Ar^+$ ion and electron beam sample neutralization, fixed analyzer transmission mode. The XPS spectra were calibrated against C-C at 284.8 eV before subsequent deconvolution simulation (spectra were fitted to multiple Gaussian-Lorentz peaks) which was processed on XPSpeak software.

CR-2032 coin cells, which consist of cathode electrode, separator, electrolyte and lithium metal as the anode, were assembled in an argon-gas filled glovebox ($H_2O$, $O_2$ < 1 ppm) to study the electrochemical performance. The electrodes were prepared by mixing active materials (cathode powder, 80 wt%), conductive carbon (C65, 10 wt%) and polyvinylidene fluoride binder (PVDF, 10 wt%) in N-methyl-2-pyrrolidone (NMP) solvent to form a slurry. The mixed slurry was then cast on an aluminum foil by a doctor blade (MTI) and dried at 60 °C overnight. Round electrodes ($\Phi$ = 12 mm) were calendared and punched from dried electrode sheet to get a final thickness ~40 $\mu$m with an active mass loading of 3.5-4.0 mg/cm$^2$. The electrode samples were further dried at 120 °C overnight in vacuum oven to remove residual NMP and moisture. A trilayer polypropylene-polyethylene-polypropylene membrane ($\Phi$ = 16 mm) and 1 M $LiPF_6$ in ethylene carbonate/ethyl methyl carbonate (EC/EMC, 3:7 in wt%) were used as the separator and electrolyte, respectively. The electrochemical performance was tested on a Land battery testing system (LAND, CT2001A) between 3.0V and 4.3V (vs. Li/Li$^+$). Specifically, cells were measured under current density of 0.33C and 5C in cycle test, while the current densities were set from 0.1C up to 5C in rate performance test (1C = 175 mAh/g). Tests of cyclic voltammetry (CV) and electrochemical impedance spectroscopy (EIS) were conducted on an electrochemical analyzer (Bio-Logic SAS, VMP3) using the EC-Lab program. In CV test, scanning potential was set between 3.0V and 4.5V (vs. Li/Li$^+$) at a rate of 0.1 mV/s. In EIS test, cells before and after cycles were measured within the frequency range from 100 kHz to 10 mHz at an amplitude of 10 mV.

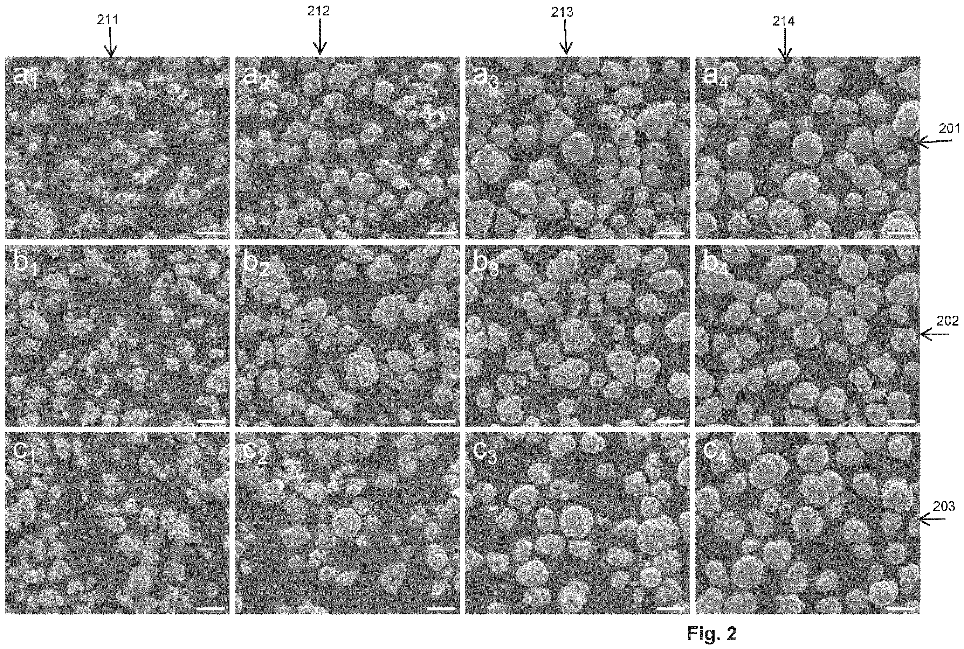

To monitor the morphology of hydroxide precursors during the synthesis, sample was collected every 3 hours, then analyzed with SEM. Fig. 2 shows the precursor morphology at different times in which the average particle diameter and sphericity increases as the reaction time gets longer. At each specified time, no clear difference is observed between samples from 0.2FNCM (row 201), 1FNCM, at row 202, and 5FNCM at row 203, indicating that the presence of fluoride ions within alkaline environment during co-precipitation does not form extra precipitates to inhibit particle growth as well as to impede particle sphericity. The particle morphology has a close correlation with its physical properties, powder tap density for instance. In Table I, the tap density also rises as the reaction goes and all FNCM samples share a similar density level at each time section. It is noted that compared to FNCMs, virgin group has a lower powder tap density at 3 hrs. (col. 211)., 6 hrs. (212) and 9 hrs. (213) which is about 77%, 79% and 89% of the average value of precursors affected by fluorine impurity. However, when the precipitation process reaches to the end at 12 hours (214), all samples approach a similar density level (~1.90 g/ml). This phenomenon suggests that fluorine impurity has influenced the co-precipitation process, due to an increased powder tap density that caused by faster nucleation and particle growth at its early stages, while brings no prominent changes in the particle morphology and tap density when the reaction comes to steady state.

TABLE I

| Sample | 3hrs | 6hrs | 9hrs | 12hrs |
|--------|------|------|------|-------|
| VNCM | 0.68 | 1.15 | 1.52 | 1.85 |
| 0.2FNCM | 0.94 | 1.47 | 1.73 | 1.93 |
| 1FNCM | 0.92 | 1.47 | 1.72 | 1.93 |
| 5FNCM | 0.78 | 1.41 | 1.65 | 1.88 |

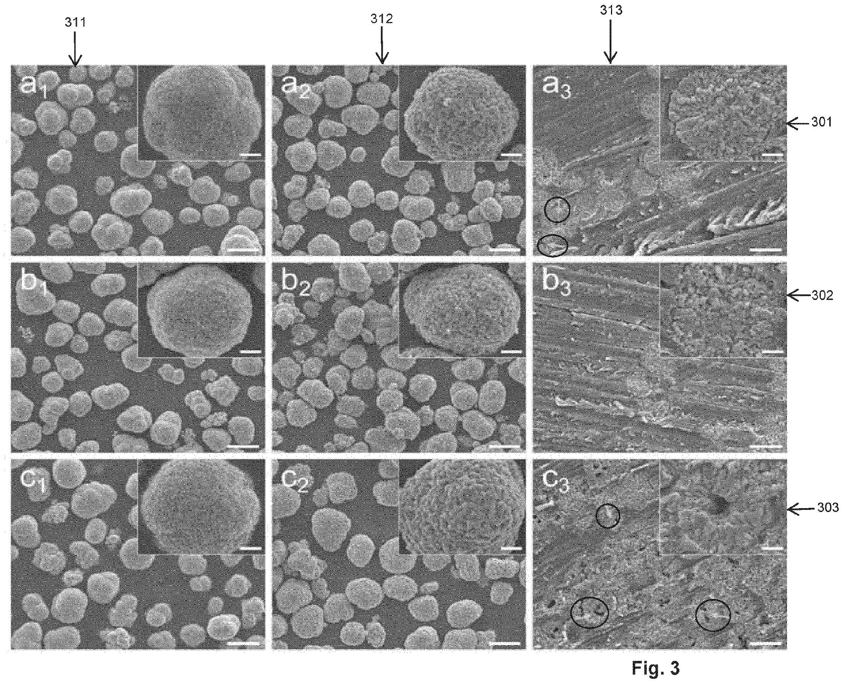

Fig. 3 shows the SEM images of synthesized NCM622 samples from precursor. In Fig. 3, SEM images of 0.2FNCM (row 301), 1FNCM (row 302) and 5FNCM (row 303) are shown for precursors (column 211), cathodes (column 312) and cathode crosssectionals (column 313) (scale bar 10$\mu$m). (Insets: images at higher magnification with scale

bar 2μm). A typical near spherical secondary particle composed of numerous tiny flake-like primary particles is observed in col. 311. Primary particles are the most fundamental building blocks of synthesized materials. During the reaction, the growth, attachment and aggregation of primary particles produces the spherical secondary particles. For all cathodes shown in col. 312, the shape of the primary particles turns from flake to polygon after high-temperature precursor sintering. Both precursors and cathodes have a consistent surface morphology as well as secondary particle dimension (~8 μm) which implies that fluorine impurity has negligible impacts on final cathode morphology. However, the particle interior is completely different. According to cross-sectional images given in col. 313, holes are found inside FNCM cathode particles (marked by circles and yellow arrows). Also, with the increase of impurity concentration from 0.2 at% to 5 at%, the hole formation within the cathode particles also rises. This demonstrates that the fluorine impurity is a key factor to the formation of holes in cathode particles and this beneficial feature could promotes the electrochemical performance enhancements.

SEM-ED S mapping results of as-prepared cathodes show that transition metal elements Ni, Co and Mn are distributed homogeneously throughout the particles.. The precise composition of each element in NCM622 cathodes at different impurity level was measured by ICP-MS. As shown in Table II, the atomic ratio of Ni, Co and Mn in all samples remains close to the theoretical value (6:2:2). Specifically, exact atomic ratio among NCM is calculated to be 6:2.05:2.00, 6:2.11:2.01, 6:2.10:2.00 and 6:2.15:2.05 (Ni = 6) for VNCM, 0.2FNCM, 1FNCM and 5FNCM, respectively. Additionally, the lithium composition remains stable regardless of variation in impurity concentration. Therefore, it can be concluded that fluoride ions do not occupy the sites of cations but to replace oxygens in cathode crystal during the synthesis process.

TABLE II

| Sample | Li (%) | Ni (%) | Mn (%) | Co (%) | Na (%) |
|--------|--------|--------|--------|--------|--------|
| VNCM | 103.6 | 59.7 | 19.9 | 20.4 | 0 |
| 0.2FNCM | 102.8 | 59.3 | 19.9 | 20.9 | 0 |
| 1FNCM | 102.6 | 59.4 | 19.8 | 20.8 | 0 |
| 5FNCM | 103.6 | 58.8 | 20.1 | 21.1 | 0 |

A typical mechanism for the synthesis of dense and spherical hydroxide particles via co-precipitation can be performed. There are two steps to form the precipitates: transition metal ions first coordinate with an ammonia complex agent (1), then slowly precipitate out of the base solution (2). Relevant two-step reactions are as follows:

$$M^{2+} + nNH_3 \rightarrow [M(NH_3)_n]^{2+} \qquad (1)$$

$$[M(NH_3)_n]^{2+} + 2OH^- \rightarrow M(OH)_2 \downarrow + nNH_3 \qquad (2)$$

At the initial stages, relatively sufficient fluoride ions could lead to the reaction:

$$[M(NH_3)_n]^{2+} + 2F^- \rightarrow MF_2 + nNH_3 \qquad (3)$$

which consumes the complex ions $[M(NH_3)_n]^{2+}$ and pushes the equilibrium of the reaction (2) to the left. In this case, the dissolution rate of primary particles exceeds recrystallization so that holes are created in precursors.

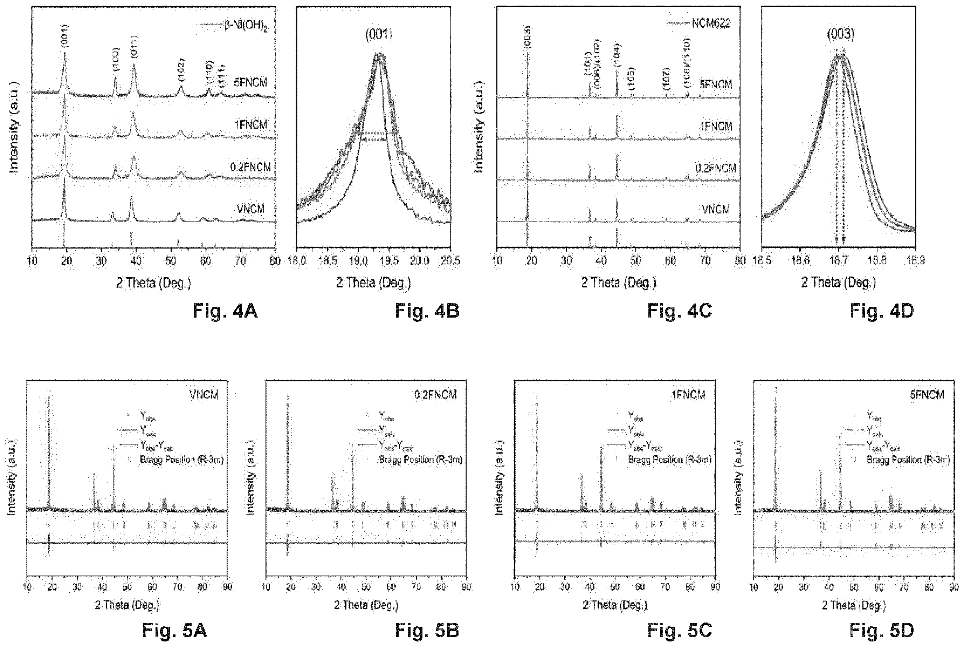

Figs. 4A-4D show phase and structure of prepared materials as analyzed by powder X-ray diffraction with patterns. Figs. 4A-4D show X-ray diffraction patterns of precursors with expansion of (001) plane in Figs. 4A,4B, and cathodes with expansion of (003) plane, in Figs. 4C and 4D. Figs. 5A-5D show refinement profiles of VNCM, 0.2FNCM, 1FNCM and 5FNCM cathodes. All patterns in Figure 4A-4B have the same diffraction peaks, corresponding to β-Ni(OH)$_2$ (PDF# 00-059-0462), which is a layered metal hydroxide. There are nine noticeable diffraction peaks in XRD spectra of all cathodes in Figs. 4C-4D, perfectly matched LiNi$_{0.6}$Co$_{0.2}$Mn$_{0.2}$O$_2$ (PDF# 00-066-0854), which refers to a typical layered transition metal oxide. No extra phases or structure changes are found in both precursor and cathode patterns. Meanwhile, a pure-phase and well-layered cathode material are maintained. Nonetheless, the (001) peak of FNCM precursors broadens a bit as shown in 4A due to a decrease in primary particle size. Also, (003) plane slightly moves to lower angles for all FNCM cathodes (Figs. 4C-4D) as a result of the expansion of c-axis in crystal lattice. It is worth noting that 5FNCM has the lowest $I_{(003)}/I_{(104)}$ ratio (1.59), while other cathodes VNCM (1.81), 0.2FNCM (1.80) and 1FNCM (1.76) hold a much higher value. The higher $I_{(003)}/I_{(104)}$ value indicates a lower Li$^+$/Ni$^{2+}$ mixing in cathode materials, resulting in a superior electrochemical performance. Thus, recovered cathodes under the influence of high concentration fluorine impurity (5 at%) may be unlikely to be competitive in comparison with the others.

In order to obtain lattice information of recovered cathodes in more detail, Rietveld refinement was used to calculate structure parameters and the rhombohedral crystal system with space group R3m was used as standard. Figs. 5-5D show fitted XRD patterns of all cathode materials and refined crystallographic data are listed in Table III, showing Rietveld refinement results of the example NCM622 cathodes. As presented in Figs. 5A-5D, a satisfactory consistency is achieved between calculated and observed patterns. VNCM is shown in Fig. 5A, and 0.2FNCM, 1FCNM and 5FCNM in Figs. 5B-5D respectively, Additionally, a relatively small $\chi^2$ is attained for each fitting operation (Table III), which guarantees all refined results in this work are of high quality. It is clear that the expansion of c-axis is related to the increase of the fluorine impurity level, which is consistent with previous studies. In fact, the inter-slab distance c of VNCM (14.214Å) is enlarged ~0.03% to 14.218Å for 5FNCM, accompanied with a -0.13% expansion in cell volume. It should be elucidated that such an expanded lattice will not only reduce the resistance for Li diffusion, but also it could cut down the energy barrier of cation exchange ($Li^+$/$Ni^{2+}$) between layers. Apparently, compared to 0.2FNCM and 1FNCM, 5FNCM suffers from less cation mixing (4.41%) due to its excess lattice expansion, whereas other cathodes with minor modification in crystal structure remain in good condition. The replacement of $O^{2-}$ with $F^-$ is believed to be the reason to induce appreciable changes to the NCM lattice parameters. It has been reported that the inclusion of fluorine can lead to the reduction of TM ions for charge compensation. Since TM ions with lower oxidation state have a larger radius, when an increasing number of $O^{2-}$ is substituted by $F^-$ under the influence of higher impurity concentration (which is further proved by the decline in $O_{Lattice}$ value), the presence of more bigger TM ions conforms to the greater lattice expansion. These results suggest that the fluorine impurity (< 1 at%) could enhance Li diffusivity in cathodes via optimized lattice modification, whereas the well-ordered structure may be damaged when excessive impurities (> 5 at%) are involved.

TABLE III

| Sample | a-axis (Å) | c-axis (Å) | volume (Å$^3$) | $O_{Lattice}$ | $Ni_{Li}$ (%) | $\chi^2$ |
|--------|-----------|-----------|----------------|---------------|---------------|----------|
| VNCM | 2.866 | 14.214 | 101.07 | 2.003 | 3.85 | 2.77 |
| 0.2FNCM | 2.866 | 14.216 | 101.14 | 1.992 | 3.78 | 2.90 |
| 1FNCM | 2.866 | 14.216 | 101.13 | 1.983 | 3.77 | 2.76 |
| 5FNCM | 2.867 | 14.218 | 101.20 | 1.934 | 4.41 | 3.33 |

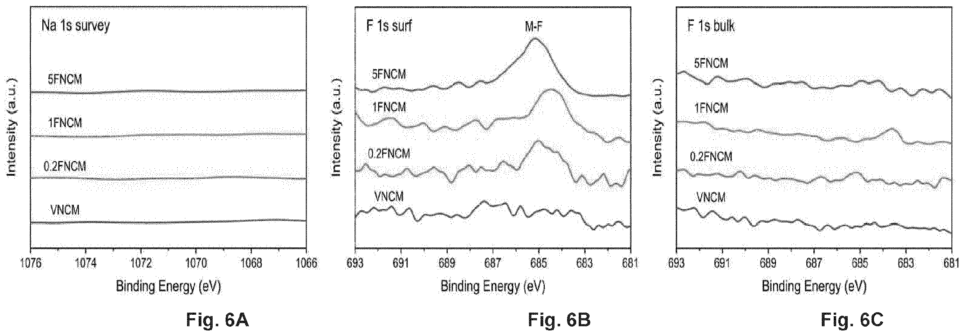

Fig. 6A-6C show spectra of surface scans of the cathode materials. XPS tests were employed to investigate materials composition and elements valence states in the prepared cathodes. A survey scan on Na 1 s in Fig. 6A shows no signal in all samples. This ensures that Na-related substances do not exist in final recovered materials. Figs. 6B and 6C display F 1s spectra of surface and bulk for all cathode samples. A strong peak is observed in surface spectra of FNCM cathodes. In Figure 6C, on the contrary, there is no fluorine signal at all. It means that the fluoride ions are mainly clustered at the surface rather than inner part of cathode particles. In addition, the peak (~685 eV) in Figure 6B closely coincides with metal fluorides like LiF and $TMF_2$ (TM = Ni, Co or Mn). Moreover, with the impurity concentration rises from 0.2 at% to 5 at%, the peak intensity increases relatively. Thus, XPS analysis verifies the inclusion of fluoride into cathode materials by the substitution for oxygen, and more importantly, fluoride ions largely reside near the particle surface to form a layer with elevated levels of low valence (+2) TM ions.

In the claimed approach, a predetermined percentage of fluoride is introduced from addition of fluorine to the leach solution, or simply from residual amounts, prior to precipitation of the charge material. The result is an increase of $Ni^{2+}$ and/or $Co^{2+}$ions over respective $Ni^{3+}$ and $Co^{3+}$ions on a surface of the charge materials following subsequent sintering. Other ions may also realize a preferred surface distribution based on the particle crystal structure.

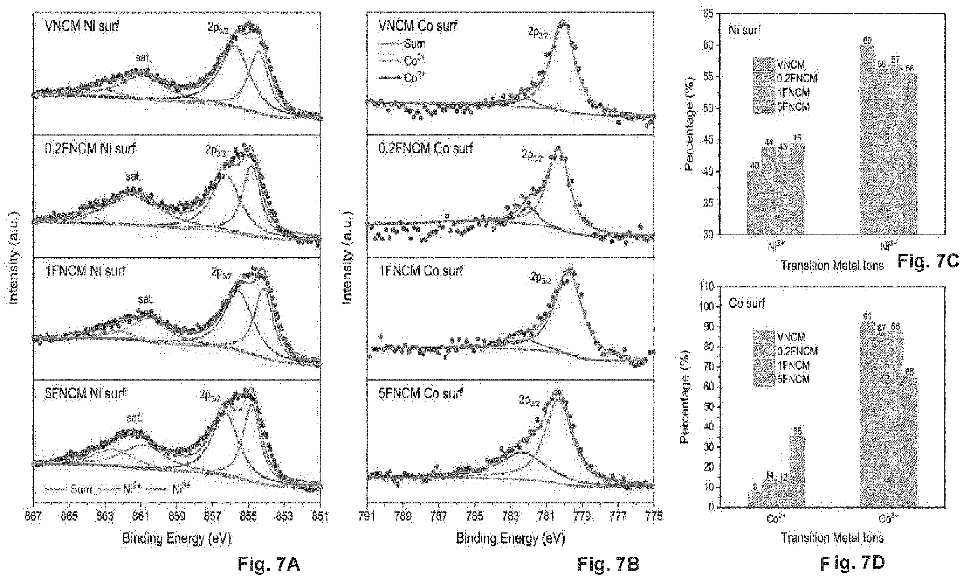

Figs. 7A-7D show deconvolution scans and percentages of Ni and Co surface ions on the cathode material particles. To clearly determine the relevant contents of $Ni^{2+}$/$Ni^{3+}$ and $Co^{2+}$/$Co^{3+}$ in cathode materials, the spectra deconvolution of $2p_{3/2}$ peak region was performed to calculate the accurate percent ratio of different TM ions. The fitted spectra of Ni $2p_{3/2}$ shown in Figure 7A indicate a mix of $Ni^{2+}$ and $Ni^{3+}$ in cathodes. In the example he leach solution has a range of 0.2-5 at% fluoride prior to precipitation of the charge material and increases a percentage of $Ni^{2+}$ ions on a surface of the charge material particles to between 40.1%-43.8%. Therefore, the fluorine has a quantifiable effect towards increasing at least the Ni and Co having an oxidation state of 2+ ($Ni^{2+}$, $Co^{2+}$) on the particle surface. As demonstrated above, when the leach solution has a range of 0.2-5 at% fluoride prior to precipitation of the charge material and increases a percentage of $Ni^{2+}$ ions on a surface of the charge material particles to between 40.1%-43.8%. Similarly, when the leach solution has a range of 0.2-5 at% fluoride prior to precipitation of the charge material and increases a percentage of $Co^{2+}$ ions on a surface of the charge material particles to between 13.0%-35.2%. Other ions may also be favorably distributed based on the halide doping. As shown above, the Ni $2p_{3/2}$ peak can be split into $Ni^{2+}$ (854.7 eV) and $Ni^{3+}$ (856.5 eV). Similarly, as shown in Figure 7B, the Co $2p_{3/2}$ peak can be divided into $Co^{2+}$ (782.1 eV) and $Co^{3+}$ (780.2

eV), respectively. According to Figure 7C, the ratio of $Ni^{2+}$ at particle surface has increased about 4% from 40.1% (VNCM) to an average of 43.8% for all FNCM cathodes. In contrast, the content of $Ni^{2+}$ within the core is only little affected by the additional fluorine impurity, with a largest ratio change less than 1% between VNCM and 5FNCM. This further confirms the fact that more $Ni^{2+}$ ions exist near surface of FNCM cathodes, which could contribute to a higher reversible capacity during cycling. Fig. 7D shows only a small amount of $Co^{2+}$ appears in virgin cathode surface. The percentage of surface $Co^{2+}$ increases to -13% for 0.2FNCM and 1FNCM and reaches as high as 35.2% for 5FNCM. It can be inferred that the reduction of cobalt ions also occurs at the particle surface, especially in the case of a high level of fluoride incorporation (5 at%) into the cathode particle. It should be noted that the large size and charge differences between $Li^+$ and $Co^{3+}$ ensure a good cation ordering, which is critical for fast lithium-ion diffusion in cathodes. Thus, with a remarkably low surface $Co^{3+}$ concentration, it is not surprising that 5FNCM has a bad cation mixing as revealed previously by XRD analysis. The ratio of $Co^{2+}$ can be shown to keeps stabl (-36%) for all samples at the bulk of the particles.

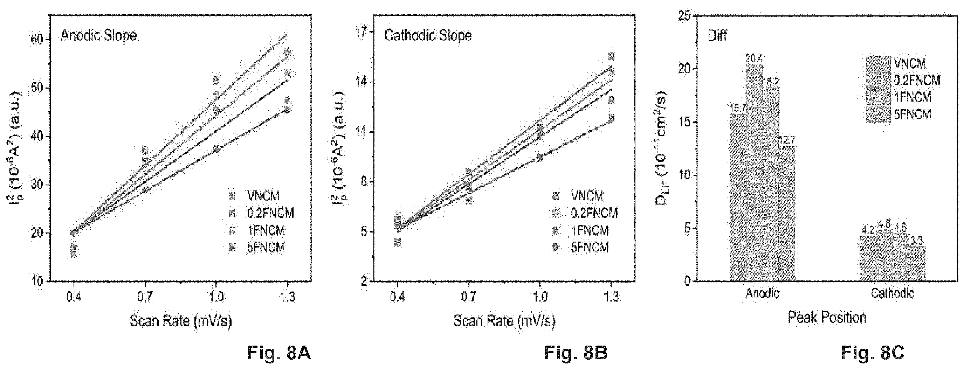

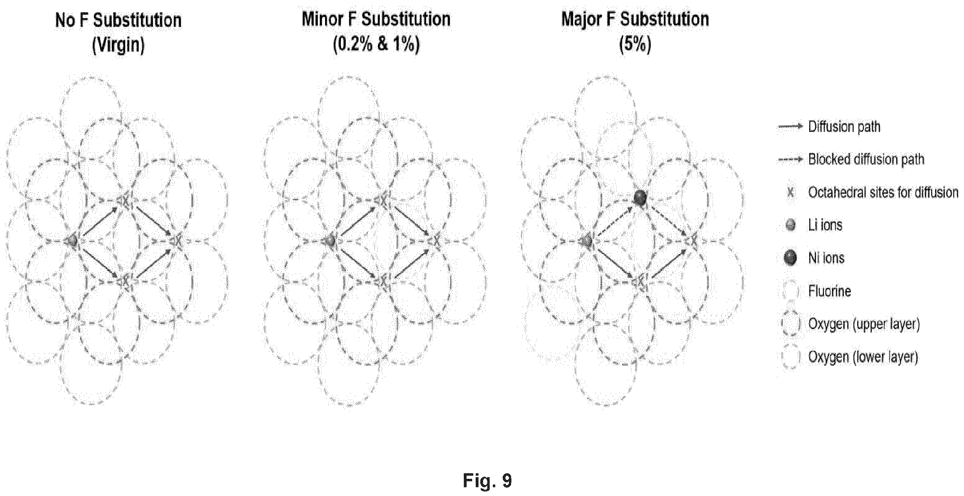

Figs. 8A-8C show a plot of fitting lines between peak current (Ip2) vs. scan rate (v) from CV curves for (8A) anodic side and (8B) cathodic side; and (8C) Calculated Li-ion diffusion coefficient. Fig. 9 shows li-ion diffusion within different cathode crystal structures. Referring to Figs. 8A-9, a series of cyclic voltammetry (CV) tests at various scan rates were used to determine Li diffusion coefficient ($D_{Li}$) by using Randles-Sevcik equation:

$$I_p^2 = (2.69 \times 10^5)^2 n^3 A^2 D_{Li} C^2 v \qquad (4)$$

where n is the number of electrons transferred in redox reaction (n = 1); A is the electrode surface area (1.13 $cm^2$ ); C is the theoretical molar concentration of Li-ion in NCM crystal (0.05 $mol/cm^3$) and $D_{Li}$ is the Li diffusion coefficient. The ratio of the squared peak current ($I_p^2$) to the scan rate ($v$) is proportional to the lithium-ion diffusivity ($D_{Li}$). The linear relationship between these two variables ($I_p^2$ vs. $v$) is depicted in Figs. 8A-8B where the slope of fitted lines directly reflects the diffusion rate of Li-ion in NCM materials. Then, the slope values are plugged into Randles-Sevcik equation to calculate $D_{Li}$ and the relevant data are given in Fig. 8C. The anodic slopes and cathodic slopes shown in Figs. 8A,8B confirm a strong correlation between anodic and cathodic diffusivity which represent the Li diffusion during de-lithiation and lithiation, respectively. The $D_{Li}$ of VNCM is calculated to be 1.57 $\times$ $10^{-10}$ $cm^2/s$ (anodic) and 4.24 $\times$ $10^{-11}$ $cm^2/s$ (cathodic), which are in accordance with recent reports.

According to the slopes, 0.2FNCM and 1FNCM have a larger value of $D_{Li}$ compared to the virgin standard, while the Li-ion diffusion condition in 5FNCM is the worst of them all. In particular, 0.2FNCM has the highest Li diffusion coefficient of 2.04 $\times$ $10^{-10}$ $cm^2/s$ (anodic) and 4.83 $\times$ $10^{-11}$ $cm^2/s$ (cathodic) which are about 30% and 14% greater than that of virgin standard, indicating that 0.2FNCM could possess the best electrochemical performance among all prepared samples. The lattice images in Fig. 9 demonstrate the effects on ionic diffusion caused by different level of fluoride inclusion in NCM crystal. It should be noted that the octahedral sites (marked by red x) between close-packed oxygen ions are for Li-ion diffusion within layers. When minor fluoride substitution occurs (< 1 at%), the diffusion paths will still remain feasible. Since fluoride ions have a smaller ionic radius (~1.3 Å) and charge number compared to oxygen ions (~1.4 Å), such a substitution could result in an enlarged interspace and a reduced energy barrier that is responsible for the increase of Li-ion diffusivity. However, excessive fluoride inclusion (> 5 at%) will trigger a considerable deterioration in cation ordering. Therefore, more diffusion routes will be blocked by the mismatched $Ni^{2+}$ ions which leads to diminished diffusion efficiency.

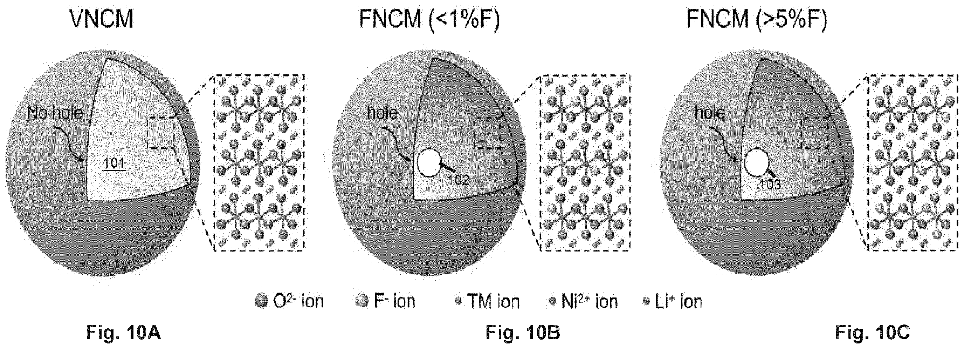

Figs. 10A-10C are schematic diagrams showing formed holes based on the doping/impurities to illustrate the positive influences on the recovered NCM622 cathodes that are caused by fluorine impurity. The addition of small amounts of halides such as fluoride results in holes in the precipitated charge material particles. The internal particle charges and forces associated with the the holes increases a ratio of 2+ to 3+ oxidation states of the charge material precursor. By introducing the fluorine reaction equilibrium during co-precipitation, fluoride ions promote the dissolution of primary particles and result in the formation of cavity, or hole in the precursors.

Fig. 10A shows that conventional virgin materials exhibit solid particles 101 with no holes. Fig. 10B shows a ~ 1 % fluorine content having negative $F^{1-}$ ions bound to $Ni^{2+}$ ions, including a hole 102, and an increased density of $F^{1-}$ ions with 5% F in Fig. 10C, also surrounding a hole 103.

Therefore, after precursors are sintered, cathode particles with a hollow structure defined by holes are obtained in FNCM materials. The definition of a particle structure including the holes has a positive effects on cathode rate performance and cycle stability because the presence of holes reduces the overall Li diffusion distance and could improve particle stability by restraining volume change during cycling. Further, due to charge compensation, a surface layer with an increased ratio of $Ni^{2+}$ is demonstrated in the FNCM cathodes, which substantially increases the reversible capacity of materials. Reducing the amount of high valence $Ni^{3+}$ at near surface enhances an ability to maintain the surface stability. In addition, the Li diffusion coefficient will be improved in the FNCM cathodes (< 1 at%) where a tiny portion of lattice oxygens are replaced by fluoride ions which results in a better structure and energy level for ion transport in the lithium layer. Despite all those positive roles, an undesired high level of cation disorder is found in 5FNCM cathode, which in turn brings negative impact on Li diffusion. A modest level of fluorine impurity, or doping, is beneficial on the recovered NCM622 cathodes obtained via hydrometallurgical process. Similar benefits extend to at least other NMC chemistries. In general, these results confirm the advantages of fluorine impurity on the NMC622 cathode materials.

A method of controlling an oxidation state in recycled secondary battery charge material, may comprise the following steps:

leaching NMC (Nickel, Manganese, Cobalt) charge materials from a recycling stream in a leach solution;
controlling a pH of the leach solution through addition of a leach acid for dissolving the charge materials in the leach solution, the leach solution having a pH;
adjusting the pH to a pH range for precipitating impurities for removal while leaving the charge materials in solution, the impurities including iron and copper;
following the impurity removal, establishing a predetermined percentage of fluoride; and
adding a strong base for precipitating charge material particles; the charge material particles including the NMC in a charge material precursor form for subsequent sintering with a Li compound, the precipitated charge materials having an oxidation state based on the predetermined percentage.

While the system and methods defined herein have been particularly shown and described with references to embodiments thereof, it will be understood by those skilled in the art that various changes in form and details may be made therein without departing from the scope of the invention encompassed by the appended claims.

**Claims**

1. A method of generating a charge material precursor having an preferred oxidation state for secondary battery charge material, comprising:

forming a leach solution including target charge materials by leaching the target charge materials from a recycling stream in a leach solution;
controlling a pH of the leach solution for dissolving the target charge materials in the leach solution;
establishing a predetermined percentage of halides in the leach solution; and
adding a strong base to the leach solution for precipitating charge material particles; the charge material particles including the target charge materials in a charge material precursor form for subsequent sintering with a Li compound.

2. The method of claim 1 wherein the target charge materials include compounds of at least one of Ni, Mn, Co, and Al.

3. The method of claims 1 or 2 wherein the halides include fluoride.

4. The method of any of claims 1-3 wherein the halides result in holes in the precipitated charge material particles, the holes increasing a ratio of 2+ to 3+ oxidation states of the charge material precursor.

5. The method of claim 3 wherein a predetermined percentage of fluoride resulting from addition of fluorine to the leach solution prior to precipitation of the charge material increases a percentage of $Ni^{2+}$ ions over $Ni^{3+}$ ions on a surface of the charge materials following subsequent sintering.

6. The method of claim 3 wherein a predetermined percentage of fluoride resulting from addition of fluorine to the leach solution prior to precipitation of the charge material increases a percentage of $Co^{2+}$ ions over $Co^{3+}$ ions on a surface of the charge material particles following subsequent sintering.

7. The method of claim 1 wherein the leach solution has a range of 0.2-5 at% fluoride prior to precipitation of the charge material and increases a percentage of $Ni^{2+}$ ions on a surface of the charge material particles to between 40.1%-43.8%.

8. The method of claim 1 wherein the leach solution has a range of 0.2-5 at% fluoride prior to precipitation of the charge material and increases a percentage of $Co^{2+}$ ions on a surface of the charge material particles to between 13.0%-35.2%.

9. The method of claim 1 further comprising forming the leach solution to include the target charge materials to result in a NCM622 charge material precursor and the halides consist of fluoride at a predetermined percentage.

10. The method of claim 1 further comprising forming the leach solution from a leach acid selected from the group consisting of sulfuric acid, hydrochloric acid, nitric acid, phosphoric acid, boric acid, hydrofluoric acid, hydrobromic acid, hydroiodic acid and perchloric acid.

11. The method of claim 1 further comprising determining the predetermined percentage of halides in the leach solution for achieving an oxidation state of one or more of the target charge materials.

12. A charge material precursor having:

nickel, manganese and cobalt (NMC) particles in a precursor form responsive to sintering with a lithium compound for forming an active charge material;
a fluorine impurity in the NMC particles of between 0at% and 5.0at%;
holes in the particles resulting from the fluorine impurity; and
each of the particles defining a structure with a surface, the surface having nickel ions, at least 40.1% of the Ni surface ions having an oxidation state of +2.

13. The charge material precursor of claim 12 wherein the surface has cobalt ions, at least 13% of the cobalt surface ions having an oxidation state of +2.

14. The charge material precursor of claim 12 or 13 wherein the fluorine increases a ratio of $Ni^{2+}$ ions over $Ni^{3+}$ ions by 10%.

15. The charge material precursor of any of claims 12 -14 wherein the fluorine increases a ratio of $Co^{2+}$ ions to 35.2%.

Fig. 1

EP 4 177 988 A1

Fig. 2

Fig. 3

Fig. 4D

Fig. 4C

Fig. 4B

Fig. 4A

Fig. 5D

Fig. 5C

Fig. 5B

Fig. 5A

Fig. 6C

Fig. 6B

Fig. 6A

Fig. 7A

Fig. 7B

Fig. 7C

Fig. 7D

**Fig. 8A**

**Fig. 8B**

**Fig. 8C**

**No F Substitution (Virgin)**

**Minor F Substitution (0.2% & 1%)**

**Major F Substitution (5%)**

Legend:
→ Diffusion path
⇢ Blocked diffusion path
✕ Octahedral sites for diffusion
● Li ions
● Ni ions
○ Fluorine
○ Oxygen (upper layer)
○ Oxygen (lower layer)

**Fig. 9**

EP 4 177 988 A1

VNCM

No hole

101

FNCM (<1%F)

hole

102

FNCM (>5%F)

hole

103

⬤ O$^{2-}$ ion    ⬤ F$^-$ ion    • TM ion    • Ni$^{2+}$ ion    • Li$^+$ ion

**Fig. 10A**          **Fig. 10B**          **Fig. 10C**

EP 4 177 988 A1

**EUROPEAN SEARCH REPORT**

Europäisches Patentamt
European Patent Office
Office européen des brevets

Application Number

EP 22 20 5310

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 086 996 A (NINGXIA BAICHUAN NEW MAT CO LTD ET AL.) 9 July 2021 (2021-07-09) * abstract * * example 2 * | 1-15 | INV. H01M4/525 H01M10/54 C01G53/00 C01G53/04 |
| X | CN 109 088 115 A (UNIV BEIJING SCIENCE & TECH) 25 December 2018 (2018-12-25) * abstract * * example 2 * | 1-8, 10-15 | |
| X | CN 109 346 741 A (CHENGDU YOUNI RUIKE TECH CO LTD) 15 February 2019 (2019-02-15) * abstract * * example 1 * | 1-8, 10-15 | |
| A | CN 101 783 408 A (BYD CO LTD) 21 July 2010 (2010-07-21) * abstract * | 1-15 | |

TECHNICAL FIELDS SEARCHED (IPC)

H01M
C01G

The present search report has been drawn up for all claims

| Place of search | Date of completion of the search | Examiner |
|---|---|---|
| The Hague | 17 March 2023 | Rosciano, Fabio |

## ANNEX TO THE EUROPEAN SEARCH REPORT
## ON EUROPEAN PATENT APPLICATION NO.

EP 22 20 5310

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2023

| Patent document cited in search report | | Publication date | Patent family member(s) | Publication date |
|---|---|---|---|---|
| CN 113086996 | A | 09-07-2021 | NONE | |
| CN 109088115 | A | 25-12-2018 | NONE | |
| CN 109346741 | A | 15-02-2019 | NONE | |
| CN 101783408 | A | 21-07-2010 | NONE | |

EPO FORM P0459

For more details about this annex : see Official Journal of the European Patent Office, No. 12/82

## REFERENCES CITED IN THE DESCRIPTION

**Patent documents cited in the description**

- US 35886216

- US 10522884 B